# EUROPÄISCHE PATENTANMELDUNG

(11) **EP 2 074 913 A1**
(43) Veröffentlichungstag der Anmeldung: **01.07.2009**
(21) Anmeldenummer: 08021270.7
(22) Anmeldetag: 08.12.2008
(51) Int. Cl.: A47J 19/06

(54) **Pressvorrichtung für Lebensmittel**

(30) Priorität: 28.12.2007 DE 102007063097
(71) Anmelder: Leifheit AG, 56377 Nssau (DE)
(72) Erfinder: Schramm, Benjamin, 65558 Eppenrod (DE)

(57) **Zusammenfassung**

Eine Pressvorrichtung (1) für Lebensmittel, insbesondere für Knoblauch, weist ein Pressplatte (2) mit Öffnungen (3) auf, durch die hindurch das zu pressende Gut drückbar ist. Die Pressplatte (2) ist an einem Handgriff (4) angeordnet und in einer vorteilhaften Ausführung gewölbt ausgebildet.

## Beschreibung

Die Erfindung betrifft eine Pressvorrichtung für Lebensmittel, insbesondere für Knoblauch, mit einer Pressplatte, die Öffnungen aufweist, durch die hindurch das zu pressende gut drückbar ist.

Pressvorrichtungen für Lebensmittel beinhalten üblicherweise einen Pressraum bereitstellendes Bauteil, dass einerseits eine Öffnung zum Einführen eines Pressstempels und andererseits Austrittsöffnungen für das Pressgut aufweist. Insbesondere bei Knoblauchpressen ist oft vorgesehen, dass das den Pressraum bereitstellende Bauteil an einem von gelenkig miteinander verbundenen Griffschenkeln angeordnet ist, während der Pressstempel an dem anderen Griffschenkel - meist beweglich - befestigt ist. Durch Gegeneinanderschwenken der Griffschenkel wird der Pressstempel in den Pressraum getrieben und das zu pressende Gut zerdrückt und durch die Austrittsöffnungen hindurch gepresst. Ein solches Zerkleinerungsgerät, insbesondere für Knoblauch, Charlotten und dergleichen ist beispielsweise aus CH 263006 bekannt.

Diese aus dem Stand der Technik bekannten Pressvorrichtungen haben unter anderem den Nachteil, dass die Reinigung durch die Vielzahl der teilweise gelenkig miteinander verbundenen Bauteile sehr aufwendig ist. Insbesondere entstehen viele Spalten und Hohlräume, in denen sich Reste des Pressgutes festsetzen können. Darüber hinaus haben die aus dem Stand der Technik bekannten Pressvorrichtungen den Nachteil, dass die Presskraft durch Schließen einer Hand allein durch die Fingerkraft aufzubringen ist, was den Anwendungsbereich dieser Pressvorrichtungen einschränkt. Ebenfalls ist nachteilig, dass die Stückgröße des zu pressenden Gutes durch die Größe des bereitgestellten Pressraumes begrenzt ist.

Es ist die Aufgabe der vorliegenden Erfindung, eine Pressvorrichtung für Lebensmittel, insbesondere für Knoblauch, anzugeben, die besonders einfach anwendbar ist und die besonders robust und unkompliziert ausgebildet werden kann.

Die Aufgabe wird durch eine Pressvorrichtung für Lebensmittel gelöst, die dadurch gekennzeichnet ist, dass die Pressplatte zumindest einen Handgriff aufweist

Die erfindungsgemäße Pressvorrichtung hat den Vorteil, dass sie nahezu unabhängig von der Größe des zu pressenden Gutes einsetzbar ist. Darüber hinaus hat sie den Vorteil, dass der Benutzer die Pressplatte unter Ausnutzung seines Körpergewichts - gegebenenfalls mit beiden Armen - auf eine Arbeitsplatte oder eine spezielle Unterlage drücken kann. Insbesondere kann der Benutzer in vorteilhafter Weise die Pressplatte zusätzlich drehen, so dass durch die entstehende Scherwirkung der Löcher eine besonders leichte Zerkleinerung des zu zerkleinernden Gutes ohne große Kraftanstrengung ermöglicht ist. Insbesondere bei der Verwendung als Knoblauchpresse wird durch Drehen der Pressplatte - bei gleichzeitiger Druckausübung - die Schale einer Knoblauchzehe vom Inneren gelöst und getrennt. Die Schale ist nach dem Abschluss des Pressvorganges nach wie vor unter der Pressplatte zu finden, während sich das Innere durch die Löcher der Pressplatte gedrückt hat.

Die Reinigung der erfindungsgemäßen Pressvorrichtung ist durch die offene Bauweise sehr leicht und einfach. Das Pressgut und die Reste des Pressvorganges können einfach durch Abstreifen von der Presse bzw. von der Unterlage entfernt werden.

Bei einer besonderen Ausführungsform, die ein walkendes Auspressen erlaubt, ist die Pressplatte gewölbt ausgebildet. Insbesondere kann vorgesehen sein, dass die Pressplatte in zwei Dimensionen gewölbt ist und dem gemäß beispielsweise die Form eines Kugelabschnitts aufweist. Natürlich kann die Pressplatte auch flach ausgeführt sein.

Bei einer besonders flexibel einsetzbaren Ausführungsform der erfindungsgemäßen Pressvorrichtung ist vorgesehen, dass die Pressplatte austauschbar an dem Handgriff angeordnet ist. Die Handausführungsform erlaubt es, den Handgriff für unterschiedliche Pressplatten - beispielsweise mit unterschiedlichen Lochgrößen und/oder unterschiedlichen Lochabständen - verwenden zu können.

Zur beidhändigen Verwendung der Pressvorrichtung kann vorgesehen sein, dass der Handgriff zwei Griffbereiche, einen für jede Hand, aufweist.

Der Handgriff kann beispielsweise in einer besonders robusten Form bügelartig ausgeführt sein. In einer anderen Ausführungsform ist der Handgriff klinkenartig ausgebildet, was eine besonders großzügige Zugänglichkeit zur Oberseite der Pressplatte und damit einhergehend eine besonders leichte Reinigung ermöglicht. Bei einer besonderen Ausführungsform ist ein Abstreifer zum Abschaben von anhaftendem Pressgut und/oder Pressresten vorgesehen. Beispielsweise kann der Abschaber abnehmbar an dem Handgriff angeordnet sein.

Bei einer besonders effizient arbeitenden Ausführungsform der erfindungsgemäßen Pressvorrichtung ist eine Unterlage vorgesehen, auf der das zu pressende Gut für den Pressvorgang positionierbar ist. Insbesondere kann die Unterlage mit Noppen versehen sein. Die Noppen können derart ausgebildet sein, dass sie ein Weggleiten des zu pressenden Gutes verhindern. Darüber hinaus kann auch vorgesehen sein, dass die Noppen, zumindest teilweise in die Öffnungen der Pressplatte einführbar sind. Hierbei ist es von Vorteil, wenn der Abstand der Noppen dem Abstand der Öffnungen entspricht. Ebenso sollte für diese Ausführungsform vorgesehen sein, dass der Außendurchmesser der Noppen kleiner oder gleich dem Innendurchmesser der Öffnungen ist.

Bei einer besonderen Ausführung weist die Pressvorrichtung, insbesondere die Pressplatte, eine Schälvorrichtung auf. Dies hat den Vorteil, dass das zu pressende Gut, beispielsweise eine Knoblauchzehe, vor dem Pressvorgang geschält werden kann, ohne dass zusätzliches Werkzeug erforderlich ist.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: eine erfindungsgemäße Pressvorrichtung mit einem bügelartigen Handgriff,
- Fig. 2: die erfindungsgemäße Pressvorrichtung mit einer Unterlage, und
- Fig. 3: eine andere erfindungsgemäße Pressvorrichtung mit einem klinkenartigen Handgriff.

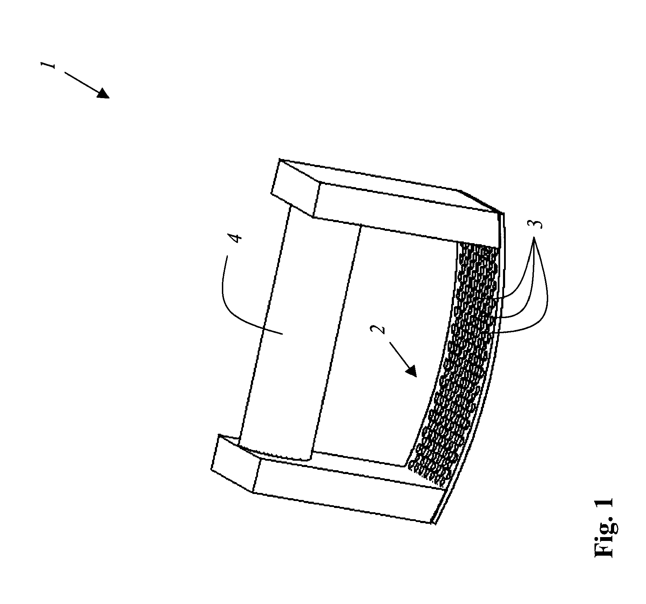

Fig. 1 zeigt eine erfindungsgemäße Pressvorrichtung 1 mit einer Pressplatte 2, die eine Vielzahl von Öffnungen 3 aufweist, durch die hindurch das zu pressende Gut gedrückt werden kann. Die Pressplatte 2 ist an einem bügelartigem Handgriff 4 angeordnet. Insbesondere um außer der Druckwirkung auch eine Scherwirkung durch Drehen der Pressplatte 2 ausüben zu können, ist diese aus Sicht des zu pressenden Gutes konvex ausgebildet.

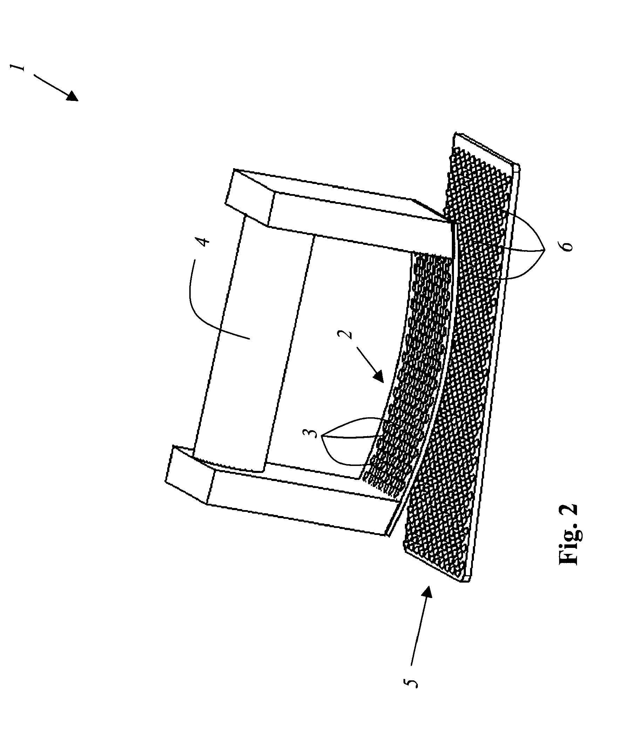

Fig. 2 zeigt die erfindungsgemäße Pressvorrichtung zusammen mit ihrer Unterlage 5 auf der das zu pressende Gut für den Pressvorgang gut positionierbar ist. Die Unterlage 5 ist mit Noppen 6 versehen, wobei der Noppenabstand und die Größe der Noppen derart gewählt ist, dass die Noppen 6 in die Öffnungen 3 der Pressplatte 2 einführbar sind.

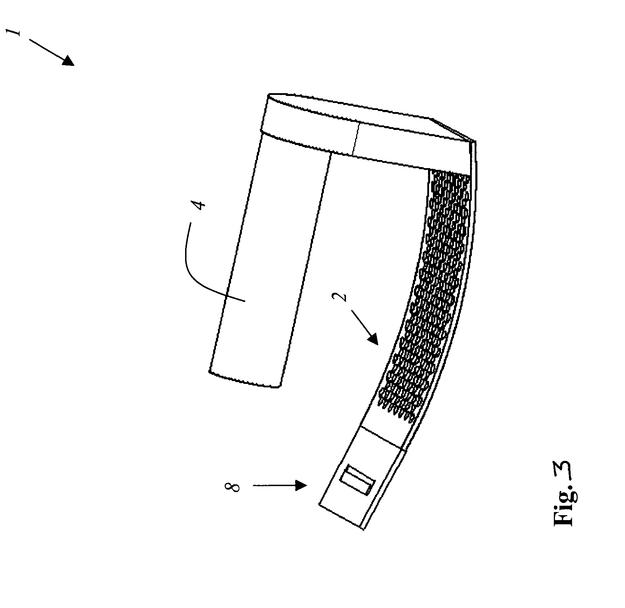

Fig. 3 zeigt eine andere Ausführungsform der erfindungsgemäßen Pressvorrichtung mit einem klinkenartigen Handgriff 7, der eine besonders großzügige Zugänglichkeit der Pressplatte 2 von der Oberseite ermöglicht. Die Pressvorrichtung 1 verfügt über eine an der Pressplatte 2 angeordnete Schälvorrichtung 8, die es beispielsweise erlaubt Knoblauchzehen vor dem Pressvorgang zu schälen.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste

- 1: Pressvorrichtung
- 2: Pressplatte
- 3: Öffnungen
- 4: Bügelförmiger Handgriff
- 5: Unterlage
- 6: Noppen
- 7: klinkenförmiger Handgriff
- 8: Schälvorrichtung

## Patentansprüche

1. Pressvorrichtung für Lebensmittel, insbesondere für Knoblauch, mit einer Pressplatte, die Öffnungen aufweist, durch die hindurch das zu pressende Gut drückbar ist, **dadurch gekennzeichnet, dass** die Pressplatte zumindest einen Handgriff aufweist.

2. Pressvorrichtung nach Anspruch 1, **dadurch gekennzeichnet, dass** die Pressplatte gewölbt ist.

3. Pressvorrichtung nach einem der Ansprüche 1 oder 2, **dadurch gekennzeichnet, dass** die Pressplatte die Form eines Kugelabschnitts aufweist.

4. Pressvorrichtung nach Anspruch 1, **dadurch gekennzeichnet, dass** die Pressplatte flach ausgeführt ist.

5. Pressvorrichtung nach einem der Ansprüche 1 bis 4, **dadurch gekennzeichnet, dass** die Pressplatte austauschbar an dem Handgriff angeordnet ist.

6. Pressvorrichtung nach einem der Ansprüche 1 bis 5, **dadurch gekennzeichnet, dass** zwei Griffbereiche zur beidhändigen Verwendung aufweist.

7. Pressvorrichtung nach einem der Ansprüche 1 bis 6, **dadurch gekennzeichnet, dass** der Handgriff als bügelartig ausgeführt ist.

8. Pressvorrichtung nach einem der Ansprüche 1 bis 7, **dadurch gekennzeichnet, dass** der Handgriff klinkenartig ausgebildet ist.

9. Pressvorrichtung nach einem der Ansprüche 1 bis 8, **dadurch gekennzeichnet, dass** ein Abstreifer zum Abschaben von anhaftenden Pressgut vorgesehen ist.

10. Pressvorrichtung nach einem der Ansprüche 1 bis 9, **dadurch gekennzeichnet, dass** eine Unterlage vorgesehen ist, auf der das zu pressende Gut für den Pressvorgang positionierbar ist.

11. Pressvorrichtung nach Anspruch 10, **dadurch gekennzeichnet, dass** die Unterlage mit Noppen versehen ist.

12. Pressvorrichtung nach einem der Ansprüche 10 oder 11, **dadurch gekennzeichnet, dass** die Unterlage auf der Oberseite Noppen aufweist, die zumindest teilweise in die Öffnungen der Pressplatte einführbar sind.

13. Pressvorrichtung nach einem der Ansprüche 10 bis 12, **dadurch gekennzeichnet, dass** der Abstand der Noppen dem Abstand der Öffnungen entspricht.

14. Pressvorrichtung nach einem der Ansprüche 10 bis 13, **dadurch gekennzeichnet, dass** der Außendurchmesser der Noppen kleiner oder gleich dem Innendurchmesser der Öffnungen ist.

15. Pressvorrichtung nach einem der Ansprüche 1 bis 14, **dadurch gekennzeichnet, dass** die Pressvorrichtung, insbesondere die Pressplatte, eine Schälvorrichtung aufweist.
